Europäisches Patentamt

European Patent Office

Office européen des brevets

(11) Numéro de publication: **0 394 592**
**A1**

## (12) DEMANDE DE BREVET EUROPEEN

(21) Numéro de dépôt: 89401179.0

(22) Date de dépôt: 25.04.89

(51) Int. Cl.5: **A47B 57/40, F16B 12/24**

(43) Date de publication de la demande:
**31.10.90 Bulletin 90/44**

(84) Etats contractants désignés:
**AT BE CH DE ES FR GB GR IT LI LU NL SE**

(71) Demandeur: **Martin, Jean Louis**
**16 rue des Coutures**
**F-95170 Deuil La Barre(FR)**

(72) Inventeur: **Martin, Jean Louis**
**16 rue des Coutures**
**F-95170 Deuil La Barre(FR)**

(74) Mandataire: **Ecrepont, Robert**
**Cabinet Ecrepont 12 Place Simon Vollant**
**F-59800 Lille(FR)**

(54) **Dispositif d'assemblage de panneaux.**

(57) L'invention se rapporte à un dispositif d'assemblage d'éléments au moins localement plats tels des panneaux pour former des éléments mobiliers tels des étagères.

Il est caractérisé en ce que :
- les deux pattes (2A, 2B) sont situées dans deux plans (11, 12) perpendiculaires entre eux,
- au moins l'une d'elles est écartée du sommet (13) de l'angle dièdre que forment ces plans (11, 12) d'une distance ($D_7$, $D_8$) égale à l'épaisseur ($E_7$, $E_8$) de l'élément plat sur lequel l'autre patte est destinée à prendre appui et,
- sur leur face interne à l'angle dièdre, les pattes présentent chacune un ergot (9) perpendiculaire à la dite face et destiné à s'engager dans un logement (10) présenté à cet effet par l'élément plat et constituant avec l'ergot les moyens d'ancrage.

Application à l'industrie du meuble.

Fig-1-

## EQUERRE D'ASSEMBLAGE DE PANNEAUX

L'invention se rapporte à un dispositif d'assemblage d'éléments au moins localement plats tels des panneaux pour former des éléments mobiliers tels des étagères.

Pour l'assemblage d'éléments plats, il est connu de faire appel à des dispositifs présentant la forme générale d'une pièce en équerre dont chacune des branches est alors associée à l'un des éléments plats par des organes de fixation tels des boulons ou des vis (CH-A-226.203).

Cette association mécanique des branches sur les éléments est longue à réaliser.

La perte fréquente d'organes de fixation concourt aussi à l'augmentation du prix de revient.

Afin d'y remédier, on connait des disposiitif (DE-U-7042916) comprenant une patte pourvue à l'une de ses extrémités de deux moyens d'appui, chacun disposé de manière à, dans une position angulaire donnée de la patte par rapport à la verticale, prendre appui sur les faces opposées d'un même élément plat sensiblement vertical.

Cette patte présentant à son extrémité opposée une forme de liaison a un autre élément plat sensiblement horizontal dont le poids sollicitera la patte en rotation autour de ses moyens d'appui ce qui accentuera le pincement et donc la force de l'assemblage.

Les moyens d'appui consistant en des doigts, ceux-ci détériorent toutefois les faces des panneaux à moins d'y adapter des réglettes métalliques inesthétiques.

Pour que le dispositif assure que l'élément plat horizontal ne s'écartera pas de l'élément plat vertical, le dispositif doit être fixé sur l'élément plat horizontal (DE-A-3433987) ou les éléments plats verticaux disposés aux extrémités opposées d'un élément plat horizontal reliés entre eux par des entretoises assemblées par des moyens traditionnels (DD-U-17059).

La complexité du montage subsiste donc au moins partiellement.

Un des résultats que l'invention vise à obtenir est un dispositif qui assure le blocage d'un élément en position requise au long de l'autre ainsi que son maintien contre cet autre élément sans organe de fixation annexe sur l'un ou l'autre des éléments plats qu'il assemble et sans entretoisement des éléments plats entre lesquels est positionné le premier élément plat.

A cet effet, elle a pour objet un dispositif d'assemblage du type précité notamment caractérisé en ce que :
- les deux pattes sont situées dans deux plans perpendiculaires entre eux,
- au moins l'une d'elles est écartée du sommet de l'angle dièdre que forment ces plans d'une distance égale à l'épaisseur de l'élément plat sur lequel l'autre patte est destinée à prendre appui et,
- sur leur face interne à l'angle dièdre, les pattes présentent chacune un ergot perpendiculaire à la dite face et destiné à s'engager dans un logement présenté à cet effet par l'élément plat et constituant avec l'ergot les moyens d'ancrage.

L'invention sera bien comprise à l'aide de la description ci-aprés faite à titre d'exemple non limitatif en regard du dessin ci-annexé qui représente schématiquement :

- figure 1 : un dispositif selon l'invention avec deux éléments plats représentés en vue partielle,
- figure 2 : le dispositif vu isolément,
- figure 3 : le dispositif vu en cours de fabrication.

En se reportant au dessin, on remarque que le dispositif d'assemblage 1 comprend des pattes 2A, 2B venant s'appuyer sur l'une des faces 3 et 4 ou 5 et 6 des éléments 7 et 8 à assembler, lesquelles pattes coopèrent avec des éléments plats à l'aide de moyens d'ancrage 9, 10.

Selon l'invention :
- les deux pattes 2A, 2B sont situées dans deux plans 11, 12 perpendiculaires entre eux,
- au moins l'une d'elles est écartée du sommet 13 de l'angle dièdre que forment ces plans 11, 12 d'une distance $D_7$, $D_8$ égale à l'épaisseur $E_7$, $E_8$ de l'élément plat sur lequel l'autre patte est destinée à prendre appui et,
- sur leur face interne à l'angle dièdre, les pattes présentent chacune un ergot 9 perpendiculaire à la dite face et destiné à s'engager dans un logement 10 présenté à cet effet par l'élément plat et constituant avec l'ergot les moyens d'ancrage.

Les ergots étant de ce fait perpendiculaires entre eux, le dispositif assure un maintien à la fois vertical, horizontal et latéral des éléments assemblés.

De plus, les éléments peuvent à tout moment être montés et démontés.

Les deux pattes sont reliées entre elles par une traverse 14 située dans un plan perpendiculaire aux dites pattes et elle-même destinée à prendre appui sur le chant des éléments plats considérés.

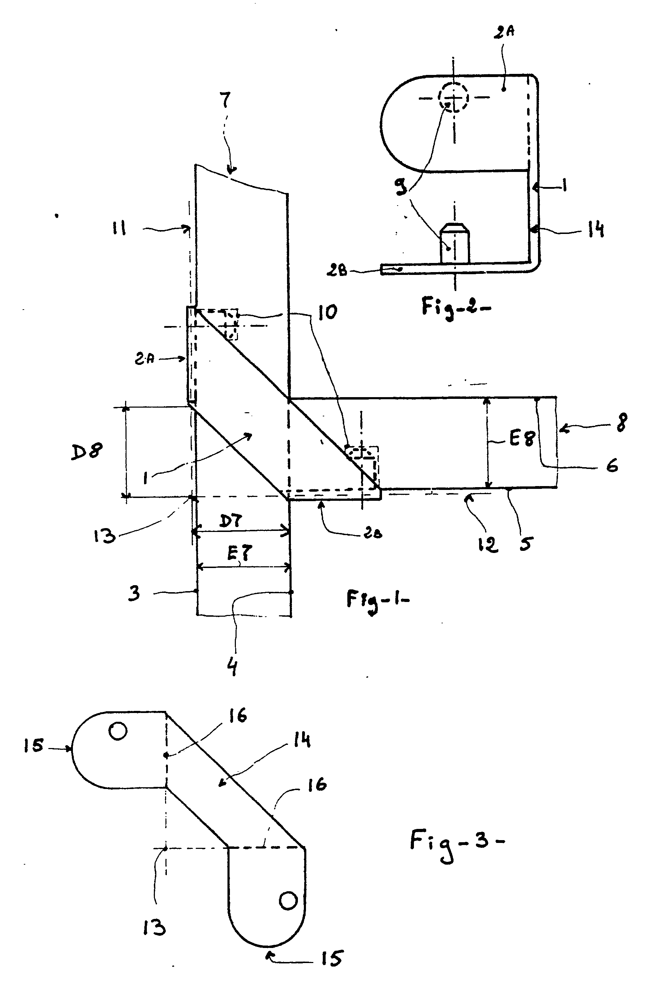

Avantageusement, les pattes 2A, 2B et la traverse 14 sont constituées dans une pièce monobloc par exemple par pliage d'un flan en métal (figure 3).

De préférence, les ergots 9 sont cylindriques de sorte que le logement 10 pourra consister en un simple perçage effectué au montage.

A cet effet, conjointement aux dispositifs d'assemblage pourra être prévu un gabarit de perçage constitué par exemple d'un dispositif dépourvu d'ergot et qui, dans l'axe de ceux-ci, présente des perçages.

De préférence, le dispositif d'assemblage est symétrique.

De même, il est avantageux de localiser les ergots le plus loin possible du sommet 13 de l'angle dièdre précité et sensiblement au milieu de la distance entre l'extrémité 15 de la patte et le pli 16 de liaison à la traverse.

Les ergots auront avantageusement une longueur de l'ordre de la moitié de l'épaisseur des éléments plats de sorte que les perçages 10 pourront être borgnes.

Ils consisteront en une tige pleine ou en un tronçon de tube.

Pour raidir l'assemblage, au moins certains des dispositifs peuvent évidemment être fixés sur l'élément par vis par exemple traversant l'ergot qui , dans ce cas, est tubulaire.

Dans le cas d'utilisation pour le bâtiment comme support de coffrages, les ergots 9 peuvent être remplacés ou complétés par des vérins de réglage.

Les ergots 9 servent à se positionner d'un côté sur un panneau vertical et de l'autre à recevoir un panneau horizontal.

Dans le cas d'un emploi où les deux panneaux seraient verticaux (cloisonnements) un tasseau servant de "clé" pourrait être fixé dans l'angle intérieur.

Cette équerre étant symétrique, elle peut être utilisée dans les deux sens.

Cette équerre monobloc peut être réalisée en :
- métal plié, ergots soudés, finition laque ou traitement de surface,
- métal moulé pour toute sa forme, finition laquée, traitée ou polie,
- matière synthétique injectée pour toute sa forme avec coloration dans sa masse ou traitée.

Pour réaliser un ensemble de deux panneaux verticaux et d'un panneau horizontal, il est nécessaire d'utiliser quatre équerres d'assemblage identiques.

Ce principe d'équerre d'assemblage trouve son application dans l'ameublement (meubles à usage domestique, rangements, vitrines, étagères, mobiliers modulaires, sièges, literie, bureaux, plans de travail), l'agencement (claustras décoratives, dessertes, constructions de stands, cloisonnements, mezzanines, estrades, escaliers), le bâtiment (équerres porteuses à partir de voiles verticaux de banches ou coffrages des planchers).

**Revendications**

1. Dispositif d'assemblage d'éléments au moins localement plats comprenant des pattes (2A, 2B) venant s'appuyer sur l'une des faces (3 et 4 ou 5 et 6) des éléments (7 et 8) à assembler, lesquelles pattes coopèrent avec des éléments plats à l'aide de moyens d'ancrage (9, 10),
ce dispositif étant **CARACTERISEE** en ce que :
- les deux pattes (2A, 2B) sont situées dans deux plans (11, 12) perpendiculaires entre eux,
- au moins l'une d'elles est écartée du sommet (13) de l'angle dièdre que forment ces plans (11, 12) d'une distance ($D_7$, $D_8$) égale à l'épaisseur ($E_7$, $E_8$) de l'élément plat sur lequel l'autre patte est destinée à prendre appui et,
- sur leur face interne à l'angle dièdre, les pattes présentent chacune un ergot (9) perpendiculaire à la dite face et destiné à s'engager dans un logement (10) présenté à cet effet par l'élément plat et constituant avec l'ergot les moyens d'ancrage.

2. Dispositif selon la revendication 1 **caractérisé** en ce que les deux pattes sont reliées entre elles par une traverse (14) située dans un plan perpendiculaire aux dites pattes et elle-même destinée à prendre appui sur le chant des éléments plats considérés.

3. Dispositif selon la revendication 1 ou 2 **caractérisé** en ce que les pattes (2A, 2B) et la traverse (14) sont constituées dans une pièce monobloc.

4. Dispositif selon l'une quelconque des revendications 1 à 3 **caractérisé** en ce que les ergots (9) sont localisés le plus loin possible du sommet (13) de l'angle dièdre précité et sensiblement au milieu de la distance entre l'extrémité (15) de la patte et le pli (16) de liaison à la traverse.

5. Dispositif selon l'une quelconque des revendications 1 à 4 **caractérisé** en ce que les ergots ont une longueur de l'ordre de la moitié de l'épaisseur des éléments plats.

Fig-2-

Fig-1-

Fig-3-

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | NL-A- 290 068  (HUWIL-WERKE)<br>* Figures 4-8 *<br>--- | 1-5 | A 47 B  57/40<br>F 16 B  12/24 |
| D,A | DE-A-3 433 987  (HORST)<br>* Page 7, ligne 11 - page 8; figure 3 *<br>--- | 1-5 | |
| A | DE-A-3 721 833  (LAUTENSCHLÄGER)<br>* Colonne 10, ligne 50 - colonne 11, ligne 4; figures 15,16 *<br>--- | 1-5 | |
| A | FR-A- 683 474  (FORGES DE STRASBOURG)<br>* Figures 4,5 *<br>--- | | |
| A | GB-A-1 165 321  (AVALON FURNITURE LTD)<br>* Figure 2 *<br>--- | 1-5 | |
| A | FR-A-2 109 324  (ROUGET)<br>--- | | |
| A | FR-A-2 071 031  (ANDERSSON)<br>----- | | |

|  | DOMAINES TECHNIQUES RECHERCHES (Int. Cl.5) |
|---|---|
|  | A 47 B<br>F 16 B |

Le présent rapport a été établi pour toutes les revendications

| Lieu de la recherche | Date d'achèvement de la recherche | Examinateur |
|---|---|---|
| LA HAYE | 14-12-1989 | DE GROOT R.K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)